# FASCICULE DE BREVET EUROPEEN

(11) **EP 2 465 339 B1**
(45) Date de publication et mention de la délivrance du brevet: **11.05.2016**
(21) Numéro de dépôt: 09848231.8
(22) Date de dépôt: 14.08.2009
(51) Int. Cl.: A01G 15/00, G10K 11/16

(54) **BARRIÈRE DE PROTECTION ACOUSTIQUE DESTINÉE À DES CANONS ANTI-GRÊLE**
LÄRMSCHUTZWAND FÜR HAGELKANONEN
NOISE BARRIER FOR HAIL CANNONS

(43) Date de publication de la demande: 20.06.2012
(73) Titulaire: Sociedad Proteccion Anti-Granizo S.L., 46018 Valencia (ES)
(72) Inventeur: OLLIVIER, Fred, E-46018 Valencia (ES); OLLIVIER BAQUERO, David, E-46018 Valencia (ES)
(74) Mandataire: Sanz-Bermell Martinez, Alejandro
(86) Numéro de dépôt international: PCT/ES2009/070342
(87) Numéro de publication internationale: WO 2011/018535

(56) Documents cités:
- CH-A5- 608 936
- FR-A1- 2 188 939
- FR-A1- 2 188 939
- FR-A2- 2 214 400
- US-A- 2 917 736
- US-A- 2 941 197
- US-A- 4 056 161
- US-A- 4 056 161
- US-A- 4 441 578
- US-A- 4 441 578
- US-A- 4 828 175
- US-A- 5 411 209
- US-A- 5 411 209
- US-A- 5 622 662

## Description

### Barrière acoustique pour canons anti-grêle

La présente invention consiste en une barrière acoustique qui a pour objet d'éviter ou de minimiser l'émission du bruit produit par un canon anti-grêle, dans toutes les directions d'un plan horizontal ou dans toutes les directions proches d'un plan horizontal.

### Historique et état de la technique

US 2 917 736 décrit un dispositif pour émettre des ondes acoustiques de haute intensité. Ce dispositif comprend un canon avec une enveloppe et un sommet supérieur. L'enveloppe a la fonction de protéger les différents éléments du canon et le sommet a la fonction d'amplificateur du son. L'enveloppe n'a pas pour but de réduire le rayonnement du son.

US 5 411 209 décrit un générateur d'ondes de choc comprenant une enveloppe conique pour guider des ions négatives de l'atmosphère vers les nuages. Des capacités d'isolation phonique ne sont pas décrites. US 2941 197 divulgue aussi un canon avec un sommet amplificateur comment celui connu de US 2 917 736. Ce sommet est placé et fixé à l'extrémité supérieure du canon, et à difference de celui de US 2 917 736 il a une forme cylindrique. Ce sommet n'a pas pour fonction d'atténuer mais d'amplifier le son ou de changer la fréquence du son.

FR2188939 décrit un canon anti-grêle qui, par l'émission d'une onde acoustique de haute intensité à intervalles réguliers, produit une modification dans la structure du nuage correspondant, réduisant la cohésion des particules et par conséquent minimisant le risque d'apparition de précipitations sous forme de grêle.

Ledit dispositif consiste en un cône ouvert vers le haut, sur le sommet inférieur duquel se trouve une chambre de combustion. Ladite chambre de combustion reçoit un dosage d'acétylène ou autre gaz combustible qui explose à intervalles de quelques secondes en produisant une onde de pression de haute intensité vers le haut en direction du degré d'ouverture du cône, aussi orienté vers le haut.

Même si les canons anti-grêle sont disposés dans des zones rurales, il est vrai qu'il existe souvent des agglomérations ou des localités isolées proches de ces canons. La puissance acoustique générée est de l'ordre de 130 dB au niveau du sol à quelques mètres de distance. Dans l'embouchure du cône, elle est beaucoup plus grande. Non seulement la puissance acoustique, mais aussi la régularité de production des explosions et le son produit par les canons anti-grêle sont très gênants, les gênes augmentant avec la diminution de la distance du foyer acoustique.

Par conséquent, il est nécessaire de minimiser l'émission de son vers l'extérieur, dans l'environnement horizontal ou presque horizontal de la source d'émission, et de préférence dans un angle solide avec une élévation d'au moins 60º du sol.

Il existe beaucoup de barrières anti-bruit, généralement conçues pour des zones d'émission acoustique continue proches des agglomérations, telles que les barrières acoustiques des routes ou des autoroutes.

### Description de l'invention

L'invention qui est proposée a pour objet une barrière acoustique pour canons anti-grêle qui comprend une enveloppe pour ledit canon anti-grêle qui, selon le mode de réalisation préféré, a une hauteur de 1,2 à 2 fois la hauteur du canon. Néanmoins, plus la hauteur sera grande, plus la section le sera également, car l'enveloppe ne doit pas entraver la projection supérieure du cône qui constitue le canon.

La barrière de protection a normalement une forme tubulaire et est au moins ouverte dans sa partie supérieure ; elle est de préférence cylindrique, avec une section annulaire.

En raison de l'onde de pression qui est produite dans la détonation, elle comprend au moins une ouverture inférieure, dans une zone proche de la chambre de combustion ou en dessous de celle-ci. Si l'on ne disposait pas de ces ouvertures, l'absorption de l'air serait réalisée à l'intérieur de la chambre, minimisant l'onde de pression produite par l'explosion, probablement en raison de la collision des ondes de sortie et d'absorption, ce qui réduirait l'effet de la détonation et donc, l'efficacité du dispositif.

En dehors de l'angle du cône qui constitue le canon et dans une zone proche de l'ouverture supérieure, au moins une bague est disposée sur le périmètre intérieur, et normalement au moins deux, produisant une rupture et une absorption supplémentaire des ondes acoustiques générées par l'explosion. L'épaisseur de la bague posée sur le périmètre intérieur est inférieure à celle de la prolongation du cône qui constitue le canon à la hauteur de cette saillie.

Il y aura de préférence deux bagues disposées sur le périmètre intérieur, une disposé plus près de l'ouverture supérieure, et une autre plus éloignée de l'ouverture supérieure, de sorte que la plus proche de l'ouverture supérieure est moins épaisse que celle qui est éloignée de ladite ouverture supérieure, selon le degré d'ouverture de l'extension du cône qui constitue le canon anti-grêle correspondant.

Les parois sont formées par un ensemble de couches de différents matériaux qui ont différentes conditions d'absorption et qui, selon le mode de réalisation préféré, sont formées par :
- Une enveloppe externe, formée par un composite, normalement avec une matrice de fibre de verre et un rembourrage polymère ;
- Une couche de goudron, collée à l'enveloppe externe :
- Au moins une couche de polyuréthane poreux et, de préférence, plus d'une couche, chacune d'une densité différente ;
- Au moins une couche de laine minérale ; et
- Une couche ou enveloppe interne résistante, formée en particulier par de la tôle d'acier perforée.

En outre, selon le mode de réalisation préféré, l'enveloppe externe comprend à des intervalles réguliers, un ensemble de pattes ou de tablettes de fixation des couches intérieures.

Les couches intérieures seront normalement formées par des modules qui reposent sur les tablettes ou les pattes correspondantes, et à l'intérieur par la tôle en acier perforée.

La barrière comprend une base de fixation au sol, normalement métallique, et la fixation est réalisée par vissage ou soudage.

La partie intérieure de la barrière dispose d'une bague de maintien et de centrage du canon anti-grêle. La bague est fixée à la barrière par un ensemble d'éléments radiaux, entre lesquels il y a des trous suffisamment grands pour permettre le passage de l'air.

La structure externe peut être constituée d'une seule pièce, selon l'option préférée, ou d'un ensemble de modules, option moins préférée. Dans ce dernier cas, les modules peuvent être annulaires ou prendre la forme d'une portion du cylindre creux.

### Brève description des figures

Afin d'illustrer l'explication qui va suivre, deux feuilles de dessins sont jointes au présent mémoire descriptif, sur lesquelles trois figures représentent l'essence de la présente invention et sur lesquelles :

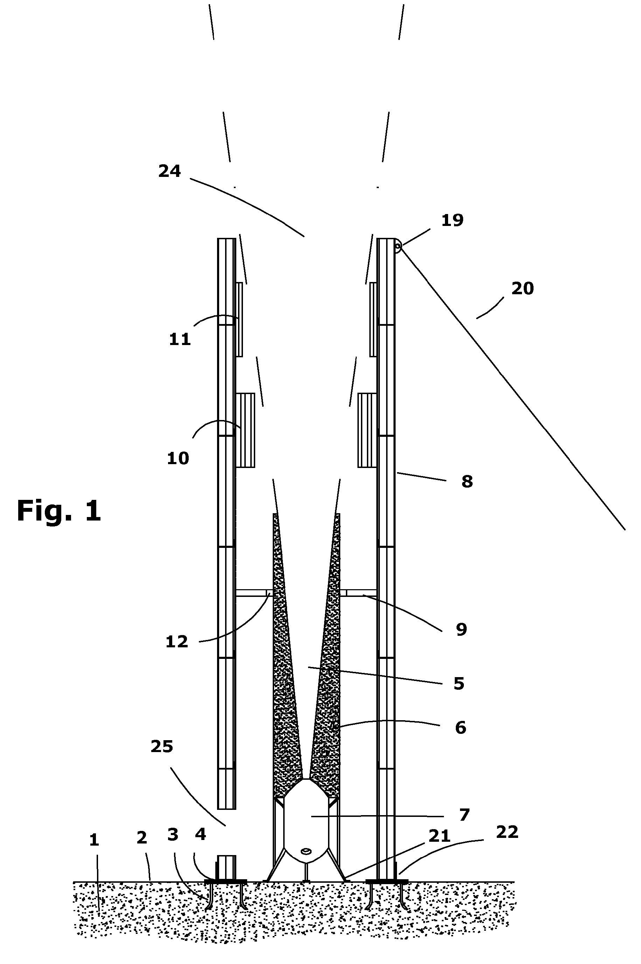

- La figure 1: présente une vue schématique en coupe de la barrière de protection de l'invention ;

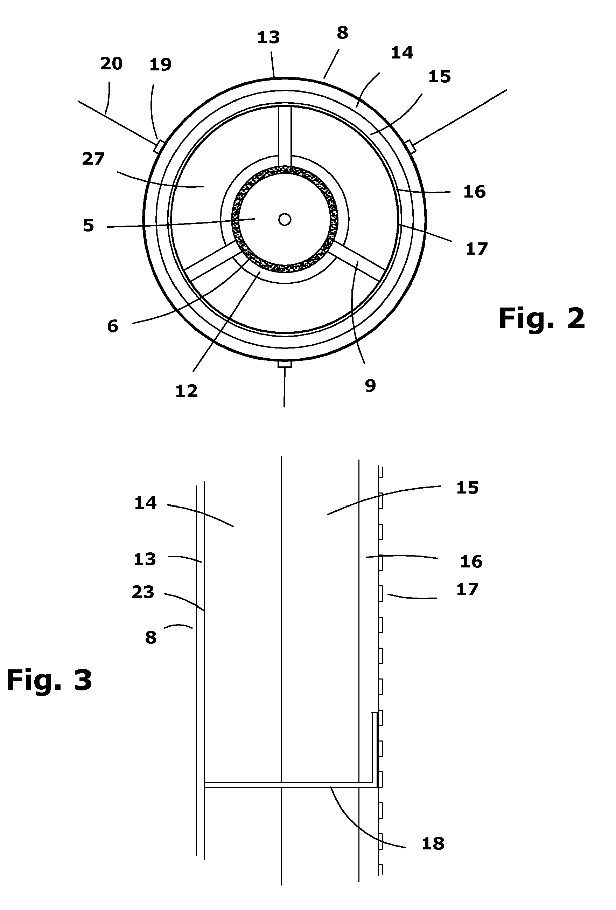

- La figure 2: présente une vue schématique en plan de la barrière de la figure 1 dans laquelle on peut voir la bague de maintien du canon anti-grêle correspondant et l'ensemble des couches qui forment cette barrière ; et
- La figure 3: présente le détail d'un exemple de la composition des couches de la barrière des figures 1 et 2.

### Description détaillée du mode de réalisation préféré

Une barrière (8) acoustique pour canons anti-grêle (5) est décrite, formée par une enveloppe externe au canon, laquelle est fermée latéralement, c'est-à-dire que sa section est une ligne fermée. Même si le mode de réalisation préféré est celui où la ligne fermée est ronde (annulaire) et où le corps de la barrière prend une forme cylindrique. Le corps qui forme ladite enveloppe est creux et a au moins une ouverture (24) dans la partie supérieure.

Même si la barrière acoustique de l'invention se trouve normalement sur le sol, le canon anti-grêle se trouve parfois à l'intérieur d'un bâtiment. Dans ce cas, tel qu'il est prévu, la barrière acoustique sera uniquement formée par la portion située sur la partie supérieure de la couverture du bâtiment, pouvant aussi s'étendre partiellement ou totalement vers l'intérieur de ce bâtiment. Nous appelons extension partielle celle dont la partie inférieure est séparée du sol.

Étant donné que le canon anti-grêle (5) a une forme intérieure conique divergente vers le haut et qu'il est souhaitable qu'aucune interférence entre la barrière acoustique et l'onde de pression n'ait lieu au moment de l'explosion, l'ouverture supérieure (24) de l'enveloppe externe (8) a une section au moins égale et de préférence supérieure à celle de la prolongation du cône qui constitue le canon à la hauteur de cette ouverture (24). Le canon (5) sera normalement entouré d'une chambre tampon remplie de sable (6) et dispose en dessous d'elle d'une chambre de combustion (7) qui sera appuyée et fixée au sol par un ensemble de pieds (21).

La hauteur maximale de l'enveloppe externe (8) est de 1,2 à 2 fois la hauteur maximale du canon anti-grêle correspondant, depuis la base d'appui au sol. Si l'enveloppe est disposée sur la couverture d'un bâtiment, la cote maximale correspondra également à 1,2 à 2 fois la hauteur maximale du canon anti-grêle.

La base de fixation de la barrière acoustique comprend au moins un corps d'ancrage (22) à une base fixe (4). L'ancrage sera normalement réalisé sur le sol (1), mais il peut également être réalisé sur la couverture d'un bâtiment. Dans le cas d'un ancrage au sol (1), des bases fixes d'ancrage (4) seront disposées, normalement pourvues de griffes (3) qui seront correctement fixées et qui pourront être alignées à la surface (2) du sol (1) ou à une hauteur différente.

L'enveloppe comprend selon l'invention au moins une ouverture (25) dans la partie inférieure de ladite enveloppe externe (8), à hauteur de la chambre de combustion (7) du canon (5), de sorte que, lors de la combustion, l'air nécessaire pour la produire pourra être absorbée, sans qu'aucune aspiration depuis la zone de sortie ne se produise, ce qui minimiserait l'effet de l'onde de pression produite.

Pour produire une rupture des ondes de pression qui sortent de la bouche du canon anti-grêle vers l'extérieur du foyer de protection du cône qui le forme, le corps de l'enveloppe externe comprend à l'intérieur au moins une bague sur le périmètre intérieur (10), dont l'épaisseur est inférieure à celle de la prolongation du cône qui constitue le canon à la hauteur de cette saillie. Il y aura de préférence au moins deux bagues (10,11) de différentes épaisseurs, celle du haut moins épaisse (11) et celle du bas plus épaisse (10).

Selon le mode de réalisation préféré selons revendication 1 l'enveloppe externe (8) est formée dans sa partie extérieure par une couche externe (13) qui est constituée d'un composite, avec un tissus de fibre de verre avec une matrice polymère. La partie intérieure est formée par une couche ou une enveloppe interne (17) résistante, concrètement une tôle en acier perforée, de sorte que le son puisse y pénétrer et y être absorbé par les couches internes de cette enveloppe.

Les couches internes, selon un mode de réalisation particulier, sont les suivantes :
- Une couche de goudron (23), collée à l'enveloppe externe ;
- Au moins une couche de polyuréthane poreux (14) et de préférence plus d'une couche (14, 15), chacune de différentes densités ; lesdites couches peuvent également avoir différentes épaisseurs ;
- Au moins une couche de laine minérale (16).

Les couches internes (14, 15, 16) sont fixées à la couche externe (13) de l'enveloppe externe (8), qui a aussi une fonction structurelle, moyennant un ensemble de pattes ou de tablettes de fixation (18) des couches intérieures qui sont disposées sur cette enveloppe à différentes hauteurs et à des intervalles réguliers ou irréguliers. Ainsi, les couches internes (14, 15, 16) sont formées par des modules pouvant reposer sur les pattes ou tablettes de fixation de la couche externe (13).

Pour maintenir de manière adéquate les distances entre le canon (5) et l'enveloppe externe (8) qui constitue la barrière acoustique, spécialement lorsque ladite barrière est sensible au vent ou le canon pourrait subir des oscillations, il est prévu de disposer dans la partie intérieure de la barrière une bague (12) de maintien et de centrage dudit canon (5). L'union entre la bague de maintien et la barrière est réalisée par un ensemble d'éléments radiaux (9), entre lesquels il y a des trous (27) suffisamment grands pour permettre le libre passage de l'air.

Il est prévu que la partie supérieure de la barrière de protection de l'invention comprenne un ensemble de points d'ancrage (19) pour placer chaque tirant (20) de fixation.

## Revendications

1. Barrière acoustique pour canons anti-grêle, lesdits canons (5) ayant une forme intérieure conique avec un sommet inférieur et une chambre de combustion (7) inférieure, qui comprend une enveloppe externe (8) fermée latéralement séparée du canon, qui est pourvue d'une ouverture supérieure (24), de sorte que ladite ouverture a une section au moins égale à celle de la prolongation du cône qui constitue le canon à la hauteur de ladite ouverture **caractérisée en ce qu'**elle a une forme cylindrique avec un diamètre d'environ deux fois le diamètre du canon et que la hauteur maximale de l'enveloppe est de 1,2 à 2 fois la hauteur maximale du canon anti-grêle correspondant et **en ce qu'**elle comprend au moins une ouverture (25) dans la partie inférieure de l'enveloppe externe (8), dans la zone de la chambre de combustion (7) du canon (5), et **en ce que** l'enveloppe externe (8) est formée dans sa partie extérieure par une couche externe (13) qui est constituée d'un composite, concrètement une fibre de verre avec une matrice polymère, et **en ce que** l'enveloppe externe (8) est formée dans sa partie intérieure par une couche ou une enveloppe interne (17) résistante, et en particulier par une tôle en acier perforée.

2. Barrière acoustique pour canons anti-grêle, selon la revendications 1, **caractérisée en ce que** la base comprend au moins un corps d'ancrage (22) à une base fixe (4).

3. Barrière acoustique pour canons anti-grêle, selon l'une quelconque des revendications 1 à 2, **caractérisée en ce que** la partie intérieure du corps qui forme l'enveloppe externe comprend au moins une bague sur le périmètre intérieur (10), dont l'épaisseur est inférieure à celle de la prolongation du cône qui constitue le canon à la hauteur de ladite bague.

4. Barrière acoustique pour canons anti-grêle, selon la revendication 3, **caractérisée en ce qu'**elle comprend deux saillies annulaires (10, 11), l'une (10) disposée plus proche de l'ouverture supérieure (24) et l'autre (11) plus éloignée de l'ouverture supérieure, de sorte que celle qui se trouve plus proche de l'ouverture supérieure est moins épaisse que celle qui est plus éloignée de ladite ouverture supérieure.

5. Barrière acoustique pour canons anti-grêle, selon l'une quelconque des revendications 1 à 4, **caractérisée en ce qu'**elle comprend, entre la couche extérieure et la couche intérieure de l'enveloppe externe ce qui suit :
- Une couche de goudron (23), collée à l'enveloppe externe ;
- Au moins une couche de polyuréthane poreux (14) et de préférence plus d'une couche (14, 15), chacune de différentes densités ; lesdites couches peuvent également avoir différentes épaisseurs ;
- Au moins une couche de laine minérale (16).

6. Barrière acoustique pour canons anti-grêle, selon la revendication 4, **caractérisée en ce que** le corps formé par l'enveloppe externe (8) comprend, à différentes hauteurs, et à des intervalles réguliers ou irréguliers, un ensemble de pattes ou de tablettes de fixation (18) des couches intérieures (14, 15, 16).

7. Barrière acoustique pour canons anti-grêle, selon la revendication 6, **caractérisée en ce que** les couches intérieures (14, 15, 16) sont formées par des modules pouvant s'appuyer sur les pattes ou tablettes de fixation de la couche externe (13).

8. Barrière acoustique pour canons anti-grêle, selon l'une quelconque des revendications 1 à 7, **caractérisée en ce que** la partie intérieure de l'enveloppe externe (8) dispose d'une bague (12) de maintien et de centrage du canon anti-grêle (5).

9. Barrière acoustique pour canons anti-grêle, selon la revendication 8, **caractérisée en ce que** la bague de maintien et de centrage du canon anti-grêle est fixée la barrière par un ensemble d'éléments radiaux (9), entre lesquels il y a des trous (27) suffisamment grands pour permettre le passage de l'air.

## Patentansprüche

1. Lärmschutzwand für Hagelkanonen, wobei die Kanonen (5) eine konische Innenform mit einem unteren Scheitelpunkt und einer unteren Verbrennungskammer (7) haben, welche eine seitlich geschlossene äußere Hülle (8), die von der Kanone getrennt ist, umfasst, und die mit einer oberen Öffnung (24) versehen ist, so dass die Öffnung einen Abschnitt aufweist, der mindestens gleich der Verlängerung des Kegels ist, welche die Kanone auf der Höhe der Öffnung bildet, **dadurch gekennzeichnet, dass** sie eine zylindrische Form hat, mit einem Durchmesser, der ungefähr den zweifachen Durchmesser der Kanone aufweist, und dass die maximale Höhe der Hülle die 1,2 bis 2-fache Höhe der maximalen Höhe der entsprechenden Hagelkanone beträgt, und dass sie mindestens eine Öffnung (25) an dem unteren Teil der äußeren Hülle (8) im Bereich der Verbrennungskammer (7) der Kanone (5) umfasst, und dass die äußere Hülle (8) an ihrer Außenseite durch eine äußere Schicht (13) gebildet ist, die aus einem Verbundstoff hergestellt ist, nämlich Glasfaser mit einer Polymermatrix, und dass die äußere Hülle (8) an ihrer Innenseite aus einer widerstandsfähigen inneren Schicht oder Hülle (17), und insbesondere einem gelochten Stahlblech, gebildet ist.

2. Lärmschutzwand für Hagelkanonen nach Anspruch 1, **dadurch gekennzeichnet, dass** die Basis mindestens einen mit einer festen Basis (4) zu verankernden Ankerkörper (22) umfasst.

3. Lärmschutzwand für Hagelkanonen nach einem der Ansprüche 1 bis 2, **dadurch gekennzeichnet, dass** die untere Seite des Körpers, welche die äußere Hülle bildet, mindestens einen Ring auf dem inneren Umfang (10) umfasst, dessen Dicke geringer ist als die Ausdehnung des Kegels, welches die Kanone auf der Höhe des Rings ausbildet.

4. Lärmschutzwand für Hagelkanonen nach Anspruch 3, **dadurch gekennzeichnet, dass** sie zwei ringförmige Vorsprünge (10, 11) umfasst, wobei ein Vorsprung (10) näher an der oberen Öffnung (24) und der andere Vorsprung (11) weiter entfernt von der oberen Öffnung angeordnet ist, so dass derjenige, welcher näher an der oberen Öffnung liegt, dünner ist als derjenige, welcher weiter entfernt von der oberen Öffnung ist.

5. Lärmschutzwand für Hagelkanonen nach einem der Ansprüche 1 bis 4, **dadurch gekennzeichnet, dass** sie zwischen der äußeren Schicht und der inneren Schicht der äußeren Hülle Folgendes umfasst:
- eine Teerschicht (23), welche an der äußeren Hülle haftet;
- mindestens eine poröse Polyurethanschicht (14), vorzugsweise mehr als eine Schicht (14, 15), jeweils unterschiedlicher Dichte; wobei die Schichten auch unterschiedliche Dicken aufweisen können;
- mindestens eine Schicht (16) aus Mineralwolle.

6. Lärmschutzwand für Hagelkanonen nach Anspruch 4, **dadurch gekennzeichnet, dass** der durch die äußere Hülle (8) ausgebildete Körper auf unterschiedlichen Höhen und in regelmäßigen oder unregelmäßigen Abständen eine Gruppe von Winkeln oder Platten (18) zur Befestigung der inneren Schichten (14, 15, 16) umfasst.

7. Lärmschutzwand für Hagelkanonen nach Anspruch 6, **dadurch gekennzeichnet, dass** die inneren Schichten (14, 15, 16) aus Modulen gebildet sind, welche sich an den Befestigungswinkeln oder -platten an der äußeren Schicht (13) abstützen können.

8. Lärmschutzwand für Hagelkanonen nach einem der Ansprüche 1 bis 7, **dadurch gekennzeichnet, dass** der innere Teil der äußeren Hülle (8) mit einem Ring (12) zum Halten und Zentrieren der Hagelkanone (5) versehen wird.

9. Lärmschutzwand für Hagelkanonen nach Anspruch 8, **dadurch gekennzeichnet, dass** der Ring zum Halten und Zentrieren der Hagelkanone durch eine Gruppe von radialen Elementen (9) an der Wand befestigt ist, zwischen denen es ausreichend große Löcher (27) gibt, um der Luft das Durchströmen zu ermöglichen.

## Claims

1. An acoustic barrier for hail cannons, said cannons (5) having a conical internal shape with a lower vertex and a lower combustion chamber (7), which comprises a laterally closed outer shell (8) that is separated from the cannon, and that is provided with an upper opening (24), such that said opening has a section that is at least equal to that of the extension of the cone making up the cannon at the level of said opening, **characterised in that** it is cylindrical in shape with a diameter that is approximately two times the diameter of the cannon, and **in that** the maximum height of the shell is from 1.2 to 2 times the maximum height of the corresponding hail cannon, and **in that** it comprises at least one opening (25) in the lower portion of the outer shell (8), in the area of the combustion chamber (7) of the cannon (5), and **in that** the outside portion of the outer shell (8) is formed of an outer layer (13) which is made up of a composite, namely a glass fibre with a polymer matrix, and **in that** the inside portion of the outer shell (8) is formed of a resistant inner layer or shell (17), and in particular of a perforated steel plate.

2. The acoustic barrier for hail cannons, according to claim 1, **characterised in that** the base comprises at least one anchor body (22) to be anchored to a fixed base (4).

3. The acoustic barrier for hail cannons, according to any one of claims 1 to 2, **characterised in that** the lower portion of the body forming the outer shell comprises at least one ring on the inside perimeter (10), the thickness of which is smaller than that of the extension of the cone constituting the cannon at the level of said ring.

4. The acoustic barrier for hail cannons, according to claim 3, **characterised in that** it comprises two annular protrusions (10, 11), one protrusion (10) arranged closer to the upper opening (24) and the other protrusion (11) further away from the upper opening, such that the one located closer to the upper opening is thinner than the one which is further away from said upper opening.

5. The acoustic barrier for hail cannons, according to any one of claims 1 to 4, **characterised in that** it comprises, between the outer layer and the inner layer of the outer shell, the following:
- a tar layer (23), adhered to the outer shell;
- at least one porous polyurethane layer (14), preferably more than one layer (14, 15), each having different densities; said layers may also have different thicknesses;
- at least one layer (16) made of mineral wool.

6. The acoustic barrier for hail cannons, according to claim 4, **characterised in that** the body formed by the outer shell (8) comprises, at different levels, and at regular or irregular intervals, a set of brackets or shelves (18) for fixing the inner layers (14, 15, 16).

7. The acoustic barrier for hail cannons, according to claim 6, **characterised in that** the inner layers (14, 15, 16) are formed by modules that can be supported on the brackets or shelves used for fixing the outer layer (13).

8. The acoustic barrier for hail cannons, according to any one of claims 1 to 7, **characterised in that** the inner portion of the outer shell (8) is provided with a ring (12) for holding and centring the hail cannon (5).

9. The acoustic barrier for hail cannons, according to claim 8, **characterised in that** the ring for holding and centring the hail cannon is fixed to the barrier by an assembly of radial elements (9), among which there are holes (27) large enough so as to allow air to pass through.
